# EUROPEAN PATENT SPECIFICATION

(11) **EP 2 265 432 B1**
(45) Date of publication and mention of the grant of the patent: **03.10.2012**
(21) Application number: 09733826.3
(22) Date of filing: 22.04.2009
(51) Int. Cl.: B29D 30/20, B29D 30/26, B29D 30/28

(54) **METHOD OF MANUFACTURING A GREEN TYRE USING A BUILDING DRUM AND A TRANSFER DEVICE**
VERFAHREN ZUR HERSTELLUNG EINES REIFENROHLINGS MITHILFE EINER BAUTROMMEL UND EINER FÖRDERUNGSVORRICHTUNG
PROCÉDÉ DE FABRICATION D'UN PNEU CRU À L'AIDE D'UN TAMBOUR DE CONFECTION ET D'UN DISPOSITIF DE TRANSFERT

(30) Priority: 25.04.2008 NL 2001527; 25.04.2008 US 125533 P
(43) Date of publication of application: 29.12.2010
(73) Proprietor: VMI Holland B.V., 8161 RK Epe (NL)
(72) Inventor: DE VRIES, Wubbo Pieter, NL-7908 NZ Hoogeveen (NL); MULDER, Gerrit, NL-8167 NS Oene (NL)
(74) Representative: Peters, Sebastian Martinus
(86) International application number: PCT/NL2009/050211
(87) International publication number: WO 2009/131446

(56) References cited:
- EP-A- 0 343 426
- EP-A- 0 719 632
- WO-A-03/084737
- US-A- 4 304 619
- US-A- 4 314 864
- US-A- 5 266 147

## Description

### BACKGROUND OF THE INVENTION

The present invention relates to a method for manufacturing a green tyre using a building drum and a transfer device, which method comprises a step of arranging tyre components for the green tyre on a building drum, a step during which the transfer device is placed around the building drum, a step during which a last manufacturing process for a green tyre is carried out on the building drum, and a removal step during which a removal device removes the green tyre from the building drum, wherein the removal device is provided with projecting elements that can be placed up to a distance from and around the outer circumference of the green tyre and which projecting elements can be placed such so as to engage the outer side of the green tyre.

Such a method is for instance known from EP-O 719 632 A2.

Document US 5266147 - A discloses a method for unloading green tires from, and positioning new carcasses on, a green tire assembly drum, using a carcass loading and unloading apparatus.

Document EP 343426 - A discloses a method of manufacturing a green tire from a carcass on a second stage tire building system including the steps of:
- providing a first rotatable drum for receiving and supporting a first stage tire carcass;
- providing a second rotatable drum axially offset from the first drum for assembling a breaker and tread cylinder;
- feeding breaker material to the second drum to form a breaker cylinder;
- feeding tread material to the second drum over the breaker cylinder to form a breaker and tread cylinder;
- stitching the tread material to the breaker material;
- transporting, by a transfer ring, the breaker and tread cylinder from the second drum onto the periphery of the carcass at the first drum for the assembly of the green tire and then transporting the green tire to an intermediate location;
- transporting, by a robot, the carcass to the first station and a green tire from the transfer ring; and
- coordinating the movement of the breaker material, the tread material, the transfer ring and the robot by a controller in a continuous and automatic cycle of operation.

Document US 4314864 - A discloses a method of manufacturing a tire on a tire building drum, which is rotatably supported by a headstock, the method comprising the steps of:
- providing a first movable carriage carrying a tire building drum;
- supporting the outboard end of the rotatable tire building drum by a drum support;
- providing a tailstock on a second movable carriage;
- grossly moving said first carriage to a successive plurality of operation stations;
- precisely orienting said first carriage at each successive operation station;
- sequentially applying tire components to the tire building drum at successive operation stations;
- moving said drum support to a passive position;
- moving said second carriage and tailstock onto said first carriage to engage the outboard end of said tire building drum rotatably with the tailstock;
- toroidally shaping the components on said tire building drum against a tread assembly held by said tailstock.

### SUMMARY OF THE INVENTlON

It is an object of the present invention to provide an alternative method, as defined in claim 1.

Preferred embodiments of the invention are defined in the dependent claims.

For that purpose according to the invention a method for manufacturing a green tyre using a building drum and a transfer device of the type mentioned in the preamble is characterised in that the removal step further comprises during the step in which the transfer device is placed around the building drum, placing the projecting elements up to a distance from and around the outer circumference of the building drum. In this way the projecting elements of the removal device can already be placed in position around the as yet not completely finished green tyre at the moment that the last production steps still have to be carried out or completed. This results in a considerable saving of time. In the method according to EP-O 719 632 A2 the projecting elements of the removal device are not placed around the green tyre until the green tyre has completely been finished, which green tyre is subsequently removed from the building drum by the removal device. At an earlier stage the transfer device has already been moved from a position around the building drum into a position spaced apart from the building drum. Although in principle said method is able to deliver green tyres of good quality, the time needed for manufacturing a green tyre is relatively long.

In an advantageous embodiment of a method according to the invention placing the projecting elements up to a distance from and around the outer circumference of the building drum is carried out before the last manufacturing process has been ended. In that way even more time is saved.

In a simple embodiment of a method according to the invention the method comprises the steps of selecting a transfer ring for the transfer device which ring comprises radially movable retaining elements for retaining the tyre components, wherein the removal step further comprises: after ending the last manufacturing process moving the retaining elements from a first inactive position, in which the retaining elements are radially farthest removed from each other and in which the retaining elements are spaced apart from each other in circumferential direction, into an active position in which the retaining elements abut the tyre components in question; when the retaining elements are in the active position, moving the building drum away from the transfer ring, after which the projecting elements are brought into engagement with the outer side of the green tyre; and subsequently moving the retaining elements towards the inactive position. By selecting such a transfer ring it can be ensured in a mechanically relatively easy way that in the step in which the transfer ring is placed around the building drum, the projecting elements can be placed around the building drum. Because the retaining elements are brought into the active position before the projecting elements are brought into engagement with the green tyre, in case of some types of green tyres (for instance those with relatively limp side walls) it is prevented that the green tyre collapses prior to removal.

### SHORT DESCRIPTION OF THE DRAWINGS

The invention will be elucidated on the basis of a number of exemplary embodiments shown in the attached drawings, in which:
Figure 1A schematically in side view shows a device for manufacturing a green tyre, which device is provided with a building drum and spaced apart therefrom a transfer device, with which device the inventive method can be carried out,
Figure 1B shows the device of Figure 1A at the stage of the method in which the transfer device is placed around the building drum, and the projecting elements of the removal device are placed between the building drum and the transfer device;
Figures 2A-2D schematically show the movement of the removal device; and
Figure 3 schematically shows a cross-section according to the line III-III of figure 1B.

### DETAILED DESCRIPTION OF THE DRAWINGS

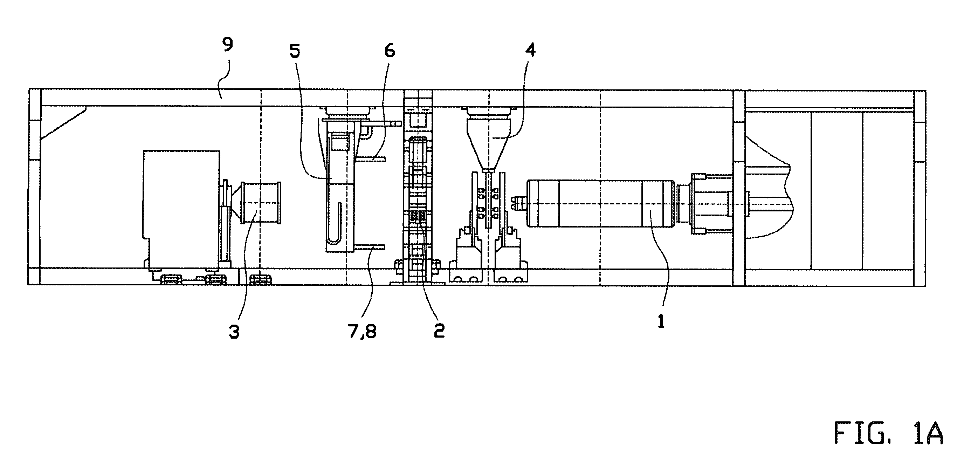

Figure 1A schematically shows a side view of a device for manufacturing a green tyre. The device is provided with a building drum 1 and spaced apart therefrom a transfer device 2. In the embodiment shown the building drum 1 is movable towards and away from the transfer device 2, which in the embodiment shown is designed so as to be stationary, yet alternatively the transfer device can be designed so as to be movable and the building drum stationary, or both can be designed so as to be movable. Furthermore a removal device 5 having projecting elements 6, 7, 8 is provided, which in one step of the method is used for removing the green tyre from the building drum 1. In that case the projecting elements 6, 7, 8 can be placed up to a distance from and around the outer circumference of the green tyre arranged on the building drum and can also be placed such so as to engage the outer side of the green tyre.

The method described below can be carried out with said device shown as an example.

In a way that is not further described, but which is known per se the method for manufacturing a green tyre comprises a step of arranging tyre components for the green tyre on the building drum 1. Reference may for instance be made to EP-O 719 632 A2. Optionally another building drum 3 may be present on which other tyre components can be arranged, which via the transfer device can be transferred to the building drum 1. Moreover other devices that are known per se, such as a bead device 4 for placing beads may be present. Said additional devices will not be further described here, in order not to make the subject of the invention unnecessarily unclear.

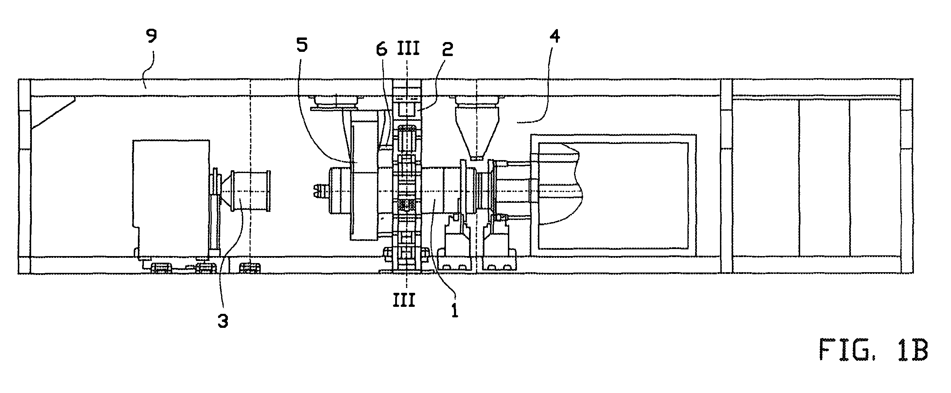

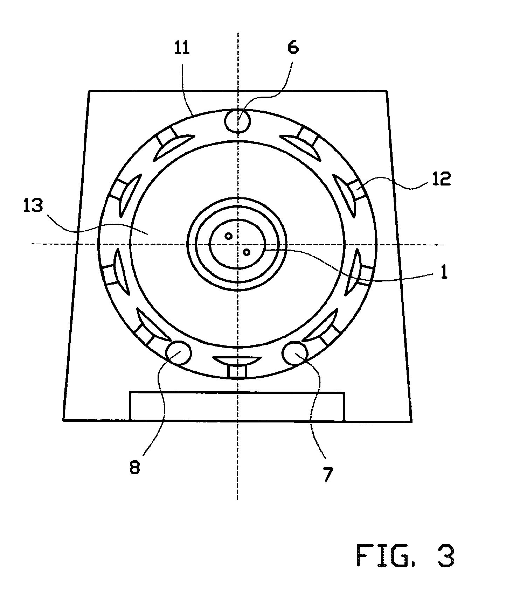

As schematically shown in figure 1B at one stage of the method the transfer device 2 is placed around the building drum 1. In said position it is common that a last manufacturing process for manufacturing the green tyre is carried out on the building drum 1. A last manufacturing process may for instance be pressing rollers against the tyre components while the building drum rotates. According to the invention it will then also be possible that the projecting elements 6, 7 , 8 of the removal device 5 are placed between the building drum 1 and the transfer device 2. In that case the projecting elements 6, 7, 8 can be placed up to a distance from and around the outer circumference of the green tyre, as is elucidated on the basis of figure 3. In that way the projecting elements 6, 7, 8 of the removal device 5 can already be placed in position around the as yet not completely finished green tyre at the moment that the last production steps have yet to be carried out, or when they have not yet been completed. This results in a considerable saving of time. Up until now a removal device has always been used that was not placed in a position around the green tyre until after the green tyre had been completely finished, the present invention breaks with this common way of operating as a result of which a considerable saving of time is achieved.

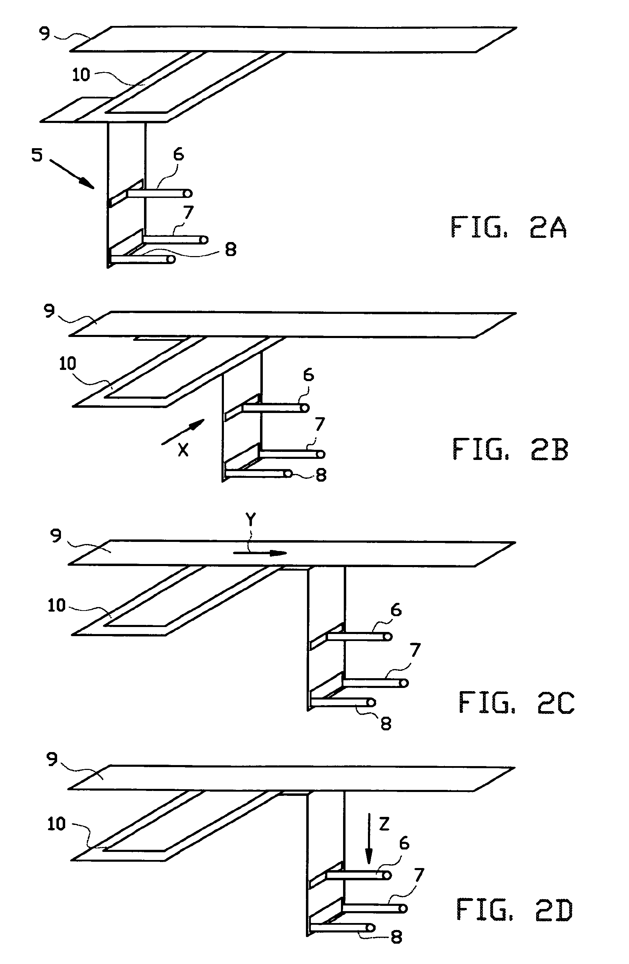

As shown in the embodiment of figures 1A and 1B the removal device 5 is suspended from an upper rail 9, which is also schematically shown in figures 2A-2D. By means of transverse rail 10 the removal device 5 can be placed beyond the path of the rail 9, so that the removal device 5 can be brought in a position in which it does not hinder other parts of the device for manufacturing the green tyre. The movement of the removal device in x and y direction is indicated by arrows in question. The arrow in the direction z indicates that the projecting elements 6, 7, 8 can be moved towards each other to clamp the green tyre. Said movement towards each other of the projecting elements is known per se from EP-O 719 632 A2. It will be clear that the removal device in an alternative embodiment may also be arranged on a bottom rail, or on a robot arm ensuring that the projecting elements can be brought up into the transfer device and around the building drum.

Figure 3 schematically shows a cross-section according to line III-III of figure 1B. Here it can be seen that the transfer device is a transfer ring 11 comprising radially movable retaining elements 12 for retaining the tyre components 13. Such a transfer ring is known per se, for instance from EP-O 719 632 A2 or EP-O 223 317 A1. For retaining the tyre components the transfer ring 11 is first placed around the building drum 1, after which the retaining elements 12 are moved from a first inactive position (as shown in figure 3) in which the retaining elements 12 are radially farthest removed from each other, into an active position (not shown) in which the retaining elements 12 abut the tyre components 13 in question. As can be seen in figure 3 the retaining elements 12 in the inactive position are spaced apart from each other in circumferential direction. According to the invention, when the retaining elements 12 are in the inactive position, the projecting elements 6, 7, 8 of the removal device are placed between adjacently situated retaining elements 12 in question. This may take place during or prior to the last operation before finishing the green tyre. When said last operation has been completed, the retaining elements 12 are brought in the active position, in which they retain the green tyre. In a manner known per se the building drum 1 is subsequently moved away from the transfer ring 2, after which the projecting elements 6, 7, 8 only need to be moved towards each other for engaging the green tyre, which then as a result of a suitable movement of the removal device can be removed from the building drum 1. Shortly retaining the green tyre by the retaining elements 12 prior to the projecting elements 6, 7, 8 engaging the green tyre, may in case of green tyres having relatively firm side walls (for instance intended for so-called run flat tyres) be optionally dispensed with.

Although in the shown embodiments three projecting elements are shown, it will be clear to an expert that any other suitable number of projecting elements can also be applied within the invention. It is furthermore possible in alternative embodiments of the invention that the position of the projecting elements differs from the position as shown in the figures. For instance it is possible in the last operation of manufacturing a green tyre that rollers press the tyre components against each other. The projecting elements will then of course be placed such so as not to interfere with the rollers.

The above description is included to illustrate the operation of preferred embodiments of the invention and not to limit the scope of the invention. Starting from the above explanation many variations that fall within the scope of the present invention, particularly as defined in the attached claims, will be evident to an expert.

## Claims

1. Method for manufacturing a green tyre using a building drum (1) and a transfer device (2), which method comprises:
a step of arranging tyre components (13) for the green tyre on a building drum (1),
a step during which the transfer device (2) is placed around the building drum (1),
a step during which a last manufacturing process for a green tyre is carried out on the building drum (1), and
a removal step during which a removal device (5) removes the green tyre from the building drum, wherein the removal device (5) is provided with projecting elements (6, 7, 8) that can be placed up to a distance from and around the outer circumference of the green tyre and which projecting elements (6, 7, 8) can be placed such so as to engage the outer side of the green tyre,
**characterised in that** the removal step further comprises during the step in which the transfer device (2) is placed around the building drum (1), placing the projecting elements (6, 7, 8) up to a distance from and around the outer circumference of the building drum (1).

2. Method according to claim 1, **characterised in that** placing the projecting elements (6, 7, 8) up to a distance from and around the outer circumference of the building drum (1) is carried out before the last manufacturing process has been ended.

3. Method according to claim 1 or 2, **characterised in that** the method comprises the steps of:
selecting a transfer ring (11) for the transfer device (2) which ring comprises radially movable retaining elements (12) for retaining the tyre components (13),
wherein the removal step further comprises: after ending the last manufacturing process moving the retaining elements (12) from a first inactive position, in which the retaining elements (12) are radially farthest removed from each other and in which the retaining elements (12) are spaced apart from each other in circumferential direction, into an active position in which the retaining elements (12) abut the tyre components in question; when the retaining elements (12) are in the active position, moving the building drum (1) away from the transfer ring (11), after which the projecting elements (6, 7, 8) are brought into engagement with the outer side of the green tyre; and subsequently moving the retaining elements (12) towards the inactive position.

## Patentansprüche

1. Verfahren zur Herstellung eines Reifenrohlings mithilfe einer Bautrommel (1) und einer Förderungsvorrichtung (2), wobei das Verfahren Folgendes umfasst:
einen Schritt des Anordnens von Reifenkomponenten (13) für den Reifenrohling auf einer Bautrommel (1),
einen Schritt, bei dem die Förderungsvorrichtung (2) um die Bautrommel (1) herum angeordnet wird,
einen Schritt, bei dem ein letzter Herstellungsprozess für einen Reifenrohling auf der Bautrommel (1) ausgeführt wird, und
einen Schritt des Entfernens, bei dem eine Entfernvorrichtung (5) den Reifenrohling von der Bautrommel abnimmt, wobei die Entfernvorrichtung (5) mit vorspringenden Elementen (6, 7, 8) versehen ist, die bis zu einem Abstand vom und um den Außenumfang des Reifenrohlings herum angeordnet werden können, und wobei die vorspringenden Elemente (6, 7, 8) so angeordnet werden können, dass sie in die Außenseite des Reifenrohlings eingreifen,
**dadurch gekennzeichnet, dass** der Schritt des Entfernens überdies während des Schrittes, bei dem die Förderungsvorrichtung (2) um die Bautrommel (1) herum angeordnet wird, das Anordnen der vorspringenden Elemente (6, 7, 8) bis zu einem Abstand von und um den Außenumfang der Bautrommel (1) herum umfasst.

2. Verfahren nach Anspruch 1, **dadurch gekennzeichnet, dass** das Anordnen der vorspringenden Elemente (6, 7, 8) bis zu einem Abstand von und um den Außenumfang der Bautrommel (1) herum ausgeführt wird, bevor der letzte Herstellungsprozess beendet ist.

3. Verfahren nach Anspruch 1 oder 2, **dadurch gekennzeichnet, dass** das Verfahren folgende Schritte umfasst:
Auswählen eines Förderungsrings (11) für die Förderungsvorrichtung (2), wobei der Ring radial bewegliche Halteelemente (12) zum Halten der Reifenkomponenten (13) umfasst,
wobei der Schritt des Entfernens ferner Folgendes umfasst: Bewegen der Halteelemente (12), nach Beendigung des letzten Herstellungsprozesses, von einer ersten inaktiven Position, in der die Halteelemente (12) radial am weitesten voneinander entfernt sind und in der die Halteelemente (12) voneinander in umlaufender Richtung beabstandet sind, in eine aktive Position, in der die Halteelemente (12) an die jeweiligen Reifenkomponenten anstoßen; wenn sich die Halteelemente (12) in aktiver Position befinden, Wegbewegen der Bautrommel (1) vom Förderungsring (11), nachdem die vorspringenden Elemente (6, 7, 8) in Eingriff mit der Außenseite des Reifenrohlings gebracht wurden; und anschließendes Bewegen der Haltelemente (12) in die inaktive Position.

## Revendications

1. Procédé de fabrication d'un pneumatique cru au moyen d'un tambour de confection (1) et d'un dispositif de transfert (2), lequel procédé comprend :
une étape d'agencement des éléments de pneu (13) pour le pneu cru sur un tambour de confection (1),
une étape durant laquelle le dispositif de transfert (2) est placé autour du tambour de confection (1),
une étape durant laquelle un dernier processus de fabrication pour un pneu cru est mis en oeuvre sur le tambour de confection (1), et
une étape d'enlèvement durant laquelle un dispositif d'enlèvement (5) enlève le pneu cru du tambour de confection, le dispositif d'enlèvement (5) étant doté d'éléments saillants (6, 7, 8) qui peuvent être placés à une distance de la circonférence externe du pneu cru, et autour de cette circonférence, lesquels éléments saillants (6, 7, 8) pouvant être disposés de manière à engager la face externe du pneu cru,
**caractérisé en ce que** l'étape d'enlèvement comprend, en outre, durant l'étape où le dispositif de transfert (2) est placé autour du tambour de confection (1), le placement des éléments saillants (6, 7, 8) à une distance de la circonférence externe du tambour de confection (1), et autour de cette circonférence.

2. Procédé selon la revendication 1, **caractérisé en ce que** le placement des éléments saillants (6, 7, 8) à une distance de la circonférence externe du tambour de confection (1), et autour de cette circonférence, est réalisé avant que soit terminé le dernier processus de fabrication.

3. Procédé selon la revendication 1 ou 2, **caractérisé en ce que** le procédé comprend les étapes consistant à :
sélectionner un anneau de transfert (11) pour le dispositif de transfert (2), lequel anneau comprend des éléments de retenue mobiles radialement (12) destinés à retenir les éléments de pneu (13),
l'étape d'enlèvement comprenant, en outre, les opérations suivantes consistant à : une fois terminé le dernier processus de fabrication, déplacer les éléments de retenue (12) depuis une première position inactive, dans laquelle les éléments de retenue (12) sont radialement les plus éloignés les uns des autres et dans laquelle les éléments de retenue (12) sont espacés les uns des autres dans la direction circonférentielle, jusque dans une position active dans laquelle les éléments de retenue (12) butent contre les éléments de pneu en question ; lorsque les éléments de retenue (12) sont dans la position active, éloigner le tambour de confection (1) de l'anneau de transfert (11), après quoi les éléments saillants (6, 7, 8) sont amenés en engagement avec la face externe du pneu cru ; et, enfin, déplacer les éléments de retenue (12) vers la position inactive.
